# EUROPÄISCHE PATENTSCHRIFT

(11) **EP 2 914 873 B1**
(45) Veröffentlichungstag und Bekanntmachung des Hinweises auf die Patenterteilung: **14.03.2018**
(21) Anmeldenummer: 13780072.8
(22) Anmeldetag: 23.10.2013
(51) Int. Cl.: F16H 3/00, F16H 3/089, F16H 37/04

(54) **SCHALTANORDNUNG FÜR EIN DOPPELKUPPLUNGSGETRIEBE**
SHIFTING ARRANGEMENT FOR A DOUBLE-CLUTCH GEARBOX
SYSTÈME DE COMMUTATION POUR UNE BOÎTE DE VITESSES À DOUBLE EMBRAYAGE

(30) Priorität: 30.10.2012 DE 102012021293
(43) Veröffentlichungstag der Anmeldung: 09.09.2015
(73) Patentinhaber: Audi AG, 85045 Ingolstadt (DE)
(72) Erfinder: VOLLMER, Frank, D-85049 Ingolstadt (DE)
(74) Vertreter: Lehle, Josef
(86) Internationale Anmeldenummer: PCT/EP2013/003186
(87) Internationale Veröffentlichungsnummer: WO 2014/067634

(56) Entgegenhaltungen:
- DE-A1-102006 007 010
- DE-A1-102006 028 798
- DE-A1-102009 024 240
- DE-A1-102011 005 029
- US-A1- 2003 148 847

## Beschreibung

Die Erfindung betrifft ein Doppelkupplungsgetriebe als Geschwindigkeits-Wechselgetriebe für Kraftfahrzeuge gemäß dem Oberbegriff des Patentanspruchs 1.

Derartige Doppelkupplungsgetriebe sind bei einem guten Getriebewirkungsgrad als automatisierte Schaltgetriebe einsetzbar, die zudem durch die Aufteilung auf zwei Teilgetriebe und zwei Trennkupplungen schnell und ohne Unterbrechung der Zugkraft schaltbar sind. In dem Bestreben, derartige Wechselgetriebe optimal an die Antriebsleistungen der Antriebsaggregate bzw. von Brennkraftmaschinen anzupassen, ist eine große Getriebespreizung erwünscht, die zum Beispiel durch das Vorsehen vermehrter Vorwärtsgänge (bei nicht zu großen Übersetzungssprüngen) realisiert werden kann.

Aufgabe der Erfindung ist es, ein Doppelkupplungsgetriebe der gattungsgemäßen Art anzugeben, das bei einer baulich kompakten Konstruktion eine große Getriebespreizung und eine erhöhte Anzahl von Vorwärtsgängen ermöglicht und das steuerungstechnisch gut beherrschbar ist.

Aus der US 2003/0148847 A1 ist ein gattungsgemäßes Doppelkupplungsgetriebe als Geschwindigkeits-Wechselgetriebe für Kraftfahrzeuge bekannt. Aus der DE 10 2009 024 240 A1 ist eine Getriebeanordnung bekannt. Aus der DE 10 2006 028 798 A1 ist ein Doppelkupplungsgetriebe bekannt. Aus der DE 10 2011 005 029 A1 ist ebenfalls ein Doppelkupplungsgetriebe bekannt. Aus der DE 10 2006 007 010 A1 ist ein weiteres Doppelkupplungsgetriebe sowie ein Verfahren zur Schaltsteuerung des Doppelkupplungsgetriebes bekannt. Die Aufgabe ist mit den Merkmalen des Patentanspruchs 1 gelöst. Vorteilhafte Ausgestaltungen und Weiterbildungen der Erfindung geben die abhängigen Ansprüche an.

Erfindungsgemäß ist dem Teilgetriebe A und/oder dem Teilgetriebe B zumindest eine Vorschalteinheit und/oder eine Nachschalteinheit zugeordnet, die in zwei unterschiedliche Übersetzungsstufen umschaltbar ist. Durch die integrierte Vor- und/oder Nachschalteinheit gelingt es, in den Teilgetrieben A und B eine Vervielfachung der Vorwärtsgänge herzustellen, wobei trotz der damit verwirklichbaren, größeren Getriebespreizung die Anzahl der Zahnradsätze verringert werden kann. Dabei wird die Baulänge des Getriebes nicht vergrößert und der Mehraufwand kann relativ gering gehalten werden. Beispielsweise ergibt sich bei einer Zuordnung einer Vor- und/oder Nachschalteinheit zum Teilgetriebe A ergibt sich somit eine Verdoppelung der Gänge des Teilgetriebes A. Zudem ist in diesem Fall auch eine größere Getriebespreizung im Teilgetriebe A realisierbar.

Die Vor- und/oder Nachschalteinheit kann in einer nicht beanspruchten Ausführungsform generell in einer Vorgelege-Bauweise ausgeführt sein, beispielsweise als eine Performerstufe, eine Vor- oder Nachschaltgruppe oder in einer anderen geeigneten Bauweise. Erfindungsgemäß jedoch ist die Vor- oder Nachschalteinheit als ein Planetengetriebe realisiert. Die Erfindung ist somit mit einer als Planetengetriebe ausgeführten Schalteinheit realisiert.

So kann in einer ersten, bevorzugten Ausführungsvariante das eine Planetengetriebe benachbart der Doppelkupplung K1, K2 auf der Eingangs-Hohlwelle des Teilgetriebes A und das zweite Planetengetriebe im Kraftfluss hinter den Zahnradsätzen beider Teilgetriebe A, B auf der Abtriebswelle positioniert sein. Damit liegen beide Planetengetriebe räumlich günstig außerhalb der Zahnradsätze der beiden Teilgetriebe. Die durch die Zahnradsätze gebildeten Übersetzungsstufen können für das Teilgetriebe A vervierfacht und für das Teilgetriebe B verdoppelt werden, wodurch definierte Gangsprünge geschaffen werden können.

In einer weiteren, alternativen Ausgestaltung der Erfindung kann das eine Planetengetriebe benachbart der Doppelkupplung auf der Eingangs-Hohlwelle des Teilgetriebes A und das andere Planetengetriebe koaxial auf der Eingangswelle des Teilgetriebes B angeordnet sein. Dies ermöglicht eine Verdoppelung der Übersetzungsstufen beider Teilgetriebe A und B bei einer baulich besonders kompakten Getriebekonstruktion.

In einer dritten, alternativen Ausgestaltung der Erfindung können beide Planetengetriebe benachbart der Doppelkupplung und unmittelbar hintereinander geschaltet auf der Eingangs-Hohlwelle des Teilgetriebes A positioniert sein. Dies ermöglicht gegebenenfalls die Zusammenfassung der beiden Planetengetriebe zu einer Bau- und Montageeinheit. Ferner können die Übersetzungsstufen des Teilgetriebes A vervierfacht werden, während die Übersetzungsstufen des Teilgetriebes B allerdings nur einfach nutzbar sind.

Wie oben erwähnt, ist die Vor- und/oder Nachschalteinheit allgemein in zwei unterschiedliche Übersetzungsstufen umschaltbar. In dem Planetengetriebe sind die beiden Übersetzungsstufen eine erste 1:1-Übersetzungsstufe und eine zweite, niedrigere (oder höhere) Übersetzungsstufe. Ein solches Planetengetriebe weist ein Eingangselement, ein Ausgangselement und ein über eine Bremse B festsetzbares Übertragungselement zum Schalten der niedrigeren Übersetzungsstufe auf. Des Weiteren sind die Planetengetriebe über eine Kupplung K3 in die höhere 1:1-Übersetzungsstufe umschaltbar, wobei die Kupplung jeweils zwei Elemente der Planetengetriebe miteinander verbindet. Die Kupplung kann dabei eine übliche, hydraulisch gesteuerte Lamellenkupplung und die Bremse eine hydraulisch beaufschlagbare Bandbremse oder ähnlich einer Lamellenkupplung ausgeführt sein, so dass komfortable, ruckfreie Umschaltungen ohne Zugkraftunterbrechungen möglich sind.

In der Getriebeauslegung sind das Eingangselement der Planetengetriebe ein Hohlrad, das Ausgangselement ein Planetenräder tragender Steg und das Übertragungselement ein mit den Planetenrädern kämmendes Sonnenrad, das über die Bremse B festsetzbar oder über die Kupplung K3 mit einem der anderen Elemente der Planetengetriebe verbindbar ist. Die Kupplung K3 ist jeweils zwischen dem antreibenden Hohlrad und dem Sonnenrad vorgesehen.

Ferner sind die Bremse B und die Kupplung K3 baulich einfach auf einer gemeinsamen Hohlwelle mit dem Sonnenrad angeordnet.

In vorteilhafter Weiterbildung der Erfindung wird vorgeschlagen, dass die beiden Planetengetriebe im Wesentlichen baugleich ausgeführt sind, gegebenenfalls aber in der niedrigeren Übersetzungsstufe unterschiedliche Übersetzungsverhältnisse aufweisen, um gezielte, an die Übersetzungsstufen durch die Zahnradsätze angepasste Gangsprünge zu realisieren.

Mehrere Ausführungsbeispiele der Erfindung sind im Folgenden anhand der beiliegenden, schematischen Zeichnung näher erläutert. Es zeigen:
- Fig. 1: ein Blockschaltbild eines Doppelkupplungsgetriebes für ein Kraftfahrzeug, mit Zahnradsätze aufweisenden Teilgetrieben A und B, wobei dem Teilgetriebe A eine Vorschalteinheit, zum Beispiel ein Planetengetriebe, vorgeschaltet und auf der Abtriebswelle eine Nachschalteinheit, zum Beispiel ein Planetengetriebe, nachgeschaltet ist;
- Fig. 2: die skizzenhafte Darstellung des vorgeschalteten Planetengetriebes gemäß Fig. 1 mit einem Hohlrad, einem Steg mit Planetenrädern und einem Sonnenrad, sowie einer Kupplung und einer Bremse zum Umschalten der Übersetzungsstufen;
- Fig. 3: das auf der Abtriebswelle integrierte, im Wesentlichen zur Fig. 2 baugleiche Planetengetriebe des Doppelkupplungsgetriebes nach Fig. 1;
- Fig. 4: eine alternative Schaltanordnung des Doppelkupplungsgetriebes mit einer dem Teilgetriebe A und einer dem Teilgetriebe B vorgeschalteten Vorschalteinheit; und
- Fig. 5: eine weitere, alternative Schaltanordnung mit zwei unmittelbar hintereinander geschalteten Schalteinheiten auf der Eingangs-Hohlwelle des Doppelkupplungsgetriebes.

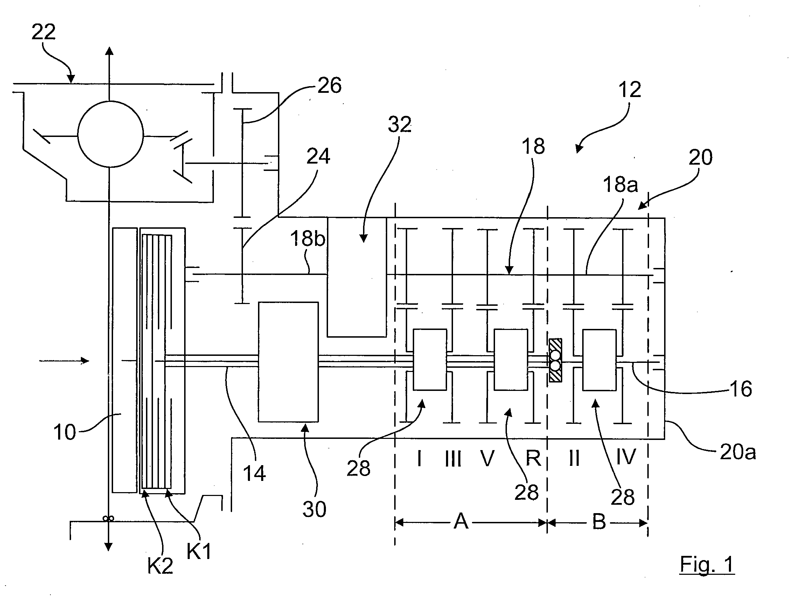

Die Fig. 1 zeigt grob schematisch ein Doppelkupplungsgetriebe 12 als Geschwindigkeits-Wechselgetriebe für Kraftfahrzeuge, mit zwei koaxialen Getriebe-Eingangswellen 14, 16, die über zwei Trennkupplungen K1, K2 mit einem antreibenden Antriebsaggregat bzw. einer Brennkraftmaschine (nicht dargestellt) trieblich verbindbar sind. Die Eingangswelle 14 ist als Hohlwelle ausgeführt. Der Doppelkupplung K1, K2 kann ein Drehschwingungsdämpfer, zum Beispiel ein Zweimassenschwungrad 10, zugeordnet sein.

Achsparallel zu den Eingangswellen 14, 16 ist eine Abtriebswelle 18 angeordnet, die über Stirnzahnräder 24, 26 auf ein an das Getriebegehäuse 20 angebautes Vorderachsdifferenzial 22 (nur angedeutet) abtreibt.

Die besagten Wellen 14, 16, 18 sind über nur angedeutete Wälzlager (ohne Bezugszeichen) in dem Getriebegehäuse 20 drehbar gelagert.

Das Doppelkupplungsgetriebe 12 ist in ein Teilgetriebe A und ein Teilgetriebe B unterteilt, wobei sich die Eingangs-Hohlwelle 14 nur innerhalb des Teilgetriebes A erstreckt, während die Eingangswelle 16 durch die Eingangswelle 14 hindurch in das Teilgetriebe B bis zu dessen Abschlusswand 20a geführt ist.

Im Teilgetriebe A sind drei Vorwärtsgang-Zahnradsätze I, III, V und ein Rückwärtsgang-Zahnradsatz R mit einem integrierten Umkehrzahnrad (nicht dargestellt) angeordnet, die sich in bekannter Weise aus Festzahnrädern und Loszahnrädern zusammensetzen, wobei die Loszahnräder über Synchronkupplungen (allgemein mit 28 bezeichnet) geschaltet werden können.

Im Teilgetriebe B sind zwei Vorwärtsgang-Zahnradsätze II und IV vorgesehen, die sich ebenfalls aus Festzahnrädern und über eine Synchronkupplung 28 schaltbaren Loszahnrädern zusammensetzen und die in der entsprechenden Übersetzungsauslegung Vorwärtsgänge bilden.

Dem Teilgetriebe A ist benachbart der Doppelkupplung K1, K2 als eine Vorschalteinheit beispielsweise ein erstes Planetengetriebe 30 vorgeschaltet, das koaxial zur Eingangs-Hohlwelle 14 ausgeführt ist und das in zwei Übersetzungsstufen bzw. in eine niedrigere Übersetzungsstufe und eine höhere 1:1-Übersetzungsstufe umschaltbar ist.

Ferner ist in die Abtriebswelle 18 im Kraftfluss nach den angeführten Zahnradsätzen I bis V und R als eine Nachschalteinheit ein zweites Planetengetriebe 32 im Wesentlichen gleicher Bauart integriert.

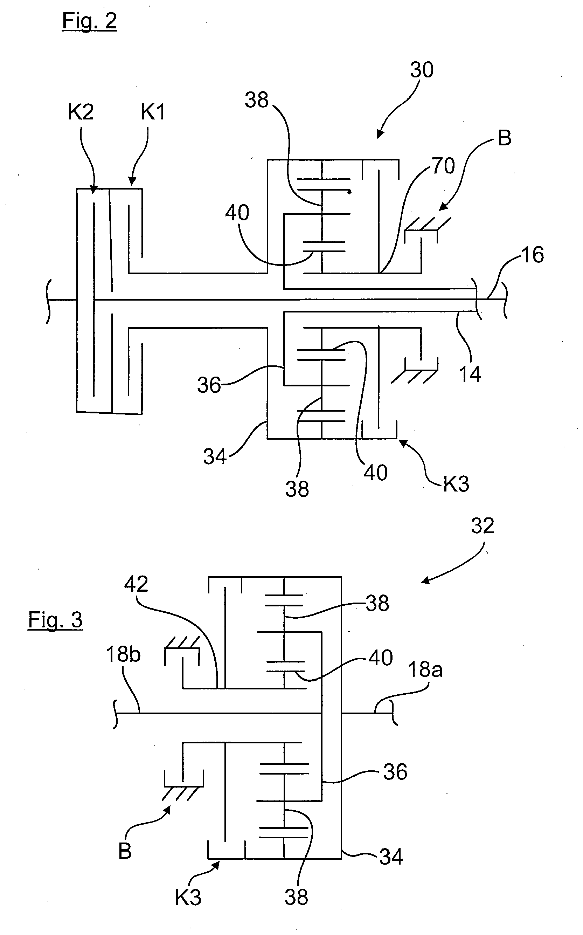

Die Fig. 2 und 3 zeigen skizzenhaft die Planetengetriebe 30 bzw. 32, deren übereinstimmende Getriebeelemente mit gleichen Bezugszeichen versehen sind.

Das an die Doppelkupplung K1, K2 angebaute Planetengetriebe 30 (Fig. 2) weist ein an die Kupplung K1 trieblich angeschlossenes Hohlrad 34 als Eingangselement, einen Steg 36 mit drehbar gelagerten Planetenrädern 38 als Ausgangselement und ein Sonnenrad 40 als Übertragungselement auf.

Der Steg 36 ist unmittelbar mit der Eingangs-Hohlwelle 14 des Teilgetriebes A trieblich verbunden, während das Sonnenrad 40 über eine weitere Hohlwelle 42 an die gehäusefeste Bremse B angeschlossen ist. Die Bremse B ist bevorzugt ähnlich einer Lamellenkupplung oder als Bandbremse aufgebaut und hydraulisch betätigbar.

Des Weiteren ist zwischen dem Hohlrad 34 und der Hohlwelle 42 bzw. dem Sonnenrad 40 eine Lamellenkupplung K3 vorgesehen, die hydraulisch beaufschlagt das Hohlrad 34 mit dem Sonnenrad 40 verbindet und damit die 1:1-Übersetzung des Planetengetriebes 30 bildet. Die Kupplung K1 treibt dann über das blockierte Planetengetriebe 30 die Hohlwelle 14 des Teilgetriebes A an.

In die niedrigere Übersetzungsstufe ist das Planetengetriebe 30 schaltbar, indem die Kupplung K3 gelöst und die Bremse B betätigt wird. Dann treibt die geschlossene Kupplung K1 über das Hohlrad 34, die Planetenräder 38 und den Steg 36 die Eingangs-Hohlwelle 14 an, während das Sonnenrad 40 als Stützelement festgebremst ist.

Das Planetengetriebe 32 weicht von dem vorbeschriebenen Planetengetriebe 30 nur dadurch ab, dass es in die Abtriebswelle 18 integriert ist, wobei der die Festzahnräder (Fig. 1) tragende Abschnitt 18a der Abtriebswelle 18 mit dem Hohlrad 34 und der abtreibende Steg 36 mit dem weiterführenden Abschnitt 18b der Abtriebswelle 18 trieblich verbunden ist.

Durch die Anordnung des Planetengetriebes 30 im Teilgetriebe A kann ein jeder Zahnradsatz I, III, V und der Rückwärtsgang-Zahnradsatz R in zwei Übersetzungen gefahren werden, bilden also acht Gänge definierter Übersetzungsauslegungen.

Die Zahnradsätze II und IV können über das in der Abtriebswelle 18 integrierte Planetengetriebe 32 ebenfalls in zwei Übersetzungen gefahren werden, dementsprechend also weitere vier Vorwärtsgänge.

Ferner können im Zusammenwirken der beiden Planetengetriebe 30, 32 über das Teilgetriebe A weitere Übersetzungsauslegungen gefahren werden, so dass hier theoretisch eine Vervierfachung der Gänge gegeben ist.

Dies schafft in vorteilhafter Weise die Möglichkeit, unter Ausnutzung gegebenenfalls nicht aller theoretisch möglichen Gänge eine große Getriebespreizung bei definierten Übersetzungssprüngen zu verwirklichen. Die Getriebesteuerung (nicht dargestellt) schaltet dabei bevorzugt ohne Zugkraftunterbrechungen die Zahnradsätze des Teilgetriebes A oder des Teilgetriebes B durch Kuppeln der Synchronkupplungen 28 aktiv und steuert die beiden Planetengetriebe 30, 32 je nach Fahrsituation in die niedrigere oder die höhere 1:1-Übersetzung.

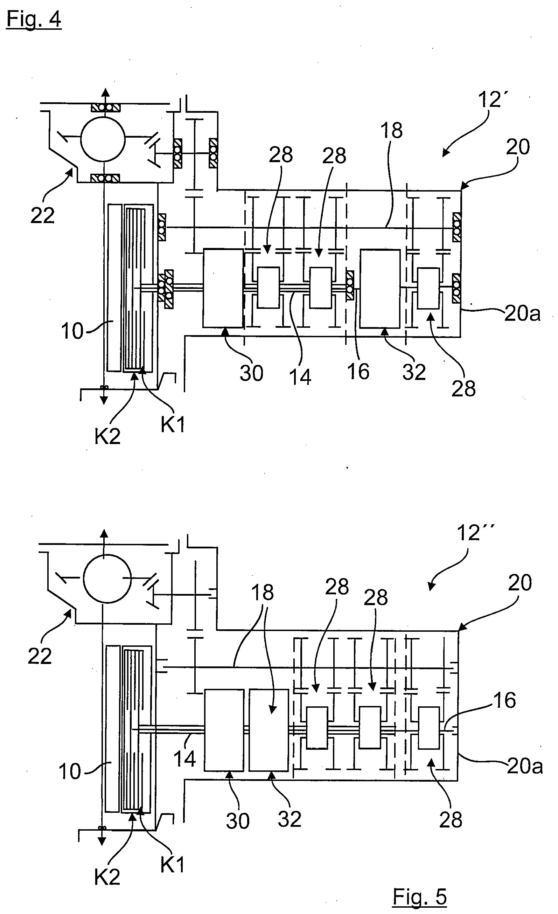

Die Fig. 4 und 5 zeigen alternative Doppelkupplungsgetriebe 12', 12", die nur soweit erläutert sind, als sie sich von dem Doppelkupplungsgetriebe 12 gemäß Fig. 1 unterscheiden. Funktionell gleiche Teile sind mit gleichen Bezugszeichen versehen.

Gemäß Fig. 4 ist das zweite Planetengetriebe 32 nicht in die Abtriebswelle 18, sondern in die zweite Eingangswelle 16 des Teilgetriebes B integriert.

Dies hat zur Folge, dass die Zahnradsätze II, IV (gemäß Fig. 1) des Teilgetriebes B bereits eingangsseitig in zwei Übersetzungsstufen schaltbar sind; ein Zusammenwirken (Hintereinanderschalten) der beiden Planetengetriebe 30, 32 ist dann nicht möglich.

Die Fig. 5 schließlich zeigt eine Ausführungsform des Doppelkupplungsgetriebes 12", bei der die beiden Planetengetriebe 30, 32 unmittelbar hintereinander geschaltet auf der Eingangs-Hohlwelle 14 des Teilgetriebes A angeordnet sind.

Dies hat zunächst den baulichen und fertigungstechnischen Vorteil, dass die beiden Planetengetriebe 30, 32 als Baueinheit ausgeführt sein können.

Über die beiden Planetengetriebe 30, 32 kann dann ein jeder über die Synchronkupplungen 28 geschalteter Gang des Teilgetriebes A in vier möglichen Übersetzungsstufen durch Umschalten der Kupplungen K3 und/oder der Bremsen B gefahren werden. Die Vorwärtsgänge der Zahnradsätze II und IV (gemäß Fig. 1) bilden dann nicht modifizierbare, einfache Übersetzungsstufen.

Neben der möglichen Vervielfachung der Übersetzungsstufen über die einzelnen Zahnradsätze I bis V und R sind über die Planetengetriebe 30, 32 schnelle und komfortable Schaltvorgänge durch bevorzugt hydraulische Steuerung der Kupplungen K3 und der Bremsen B durchführbar. Über die Trennkupplungen K1, K2 wird in üblicher Weise das Antriebsmoment auf die Zahnradsätze I, III, V, R und II, IV der Teilgetriebe A und B geleitet.

Die Erfindung ist nicht auf die dargestellten Ausführungsbeispiele beschränkt.

Je nach erforderlicher Getriebespreizung und gewünschter Anzahl an Vorwärtsgängen und Rückwärtsgängen können im Teilgetriebe A und im Teilgetriebe B des Doppelkupplungsgetriebes 12 mehr oder weniger Zahnradsätze angeordnet sein. Auch die baulichen Gegebenheiten sind gegebenenfalls bei der Anordnung der beiden Planetengetriebe 30, 32 maßgeblich.

Die Übersetzungsverhältnisse der beiden Planetengetriebe 30, 32 können in der niedrigeren Übersetzungsstufe unterschiedlich ausgeführt sein, um definiert größere oder kleinere Gangsprünge zu verwirklichen. Die Planetengetriebe 30, 32 können gegebenenfalls aus baulichen oder räumlichen Gründen auch anders (zum Beispiel ohne Hohlrad und mit einem Steg mit Stufenplanetenrädern, die mit zwei axial benachbarten Sonnenrädern kämmen) ausgeführt sein.

Das Doppelkupplungsgetriebe 12 kann auch für Allradantrieb des Kraftfahrzeugs ausgelegt sein. Dazu kann beispielsweise die Abtriebswelle 18 als Hohlwelle ausgeführt sein, die auf das Ausgleichsgehäuse eines integrierten Zwischenachsdifferenziales abtreibt. Deren Ausgangswellen können dann ein hinteres Achsdifferenzial und durch die Hohlwelle hindurch das vordere Achsdifferenzial 22 antreiben.

## Patentansprüche

1. Doppelkupplungsgetriebe als Geschwindigkeits-Wechselgetriebe für Kraftfahrzeuge, mit zwei koaxial angeordneten Eingangswellen (14, 16), die über je eine Kupplung (K1, K2) aktivierbar sind, mit einer achsparallelen Abtriebswelle (18) und mit auf den Wellen (14, 16, 18) angeordneten, mittels Synchronkupplungen (28) schaltbaren Zahnradsätzen zur Bildung mehrerer Vorwärtsgänge und eines Rückwärtsganges, wobei die Zahnradsätze in ein erstes Teilgetriebe (A) mit der einen Eingangswelle (14) und in ein zweites Teilgetriebe (B) mit der anderen Eingangswelle (16) aufgeteilt sind, wobei dem ersten Teilgetriebe (A) und/oder dem zweiten Teilgetriebe (B) zumindest eine Vor- und/oder Nachschalteinheit (30, 32) zugeordnet ist, die in zwei unterschiedliche Übersetzungsstufen umschaltbar ist, wobei die zumindest eine Vor- und/oder Nachschalteinheit (30, 32) ein in zwei Übersetzungsstufen umschaltbares Planetengetriebe ist, wobei die Vor- und/oder Nachschalteinheit (30, 32) als Planetengetriebe ein Eingangselement (34), ein Ausgangselement (36) und ein über eine Bremse (B) festsetzbares Übertragungselement (40) zum Schalten der niedrigeren Übersetzungsstufe aufweist, und wobei das Planetengetriebe über eine Kupplung (K3) in die höhere 1:1-Übersetzungsstufe umschaltbar sind, wobei die Kupplung (K3) jeweils zwei Elemente (34, 40) des Planetengetriebes miteinander verbindet, **dadurch gekennzeichnet, dass** das Eingangselement des Planetengetriebes ein Hohlrad (34) ist, dass das Ausgangselement ein Planetenräder (38) tragender Steg (36) ist, und dass das Übertragungselement ein mit den Planetenrädern (38) kämmendes Sonnenrad (40) ist, das über die Bremse (B) festsetzbar oder über die Kupplung (K3) mit einem der anderen Elemente (34) der Planetengetriebe verbindbar ist, dass die Kupplung (K3) jeweils zwischen dem antreibenden Hohlrad (34) und dem Sonnenrad (40) vorgesehen ist, und dass die Bremse (B) und die separate Kupplung (K3) auf einer gemeinsamen Hohlwelle (42) mit dem Sonnenrad (40) angeordnet sind.

2. Doppelkupplungsgetriebe nach Anspruch 1, **dadurch gekennzeichnet, dass** eine erste Schalteinheit (30) als Vorschalteinheit auf der Eingangswelle eines der Teilgetriebe (A, B) und eine zweite Schalteinheit (32) im Kraftfluss hinter den Zahnradsätzen (I bis V, R) beider Teilgetriebe (A, B) auf der Abtriebswelle (18) positioniert ist.

3. Doppelkupplungsgetriebe nach Anspruch 1, **dadurch gekennzeichnet, dass** die erste Schalteinheit (30) benachbart der Doppelkupplung (K1, K2) auf der als eine Eingangs-Hohlwelle ausgebildeten Eingangswelle (14) des ersten Teilgetriebes (A) und die zweite Schalteinheit (32) auf der Eingangswelle (16) des zweiten Teilgetriebes (B) angeordnet ist.

4. Doppelkupplungsgetriebe nach Anspruch 1, **dadurch gekennzeichnet, dass** die beiden Schalteinheiten (30, 32) unmittelbar hintereinander geschaltet auf einer Eingangswelle eines Teilgetriebes (A, B) positioniert sind.

## Claims

1. Double-clutch gearbox as a change-speed gearbox for motor vehicles, with two coaxially arranged input shafts (14, 16), each of which can be activated via a respective clutch (K1, K2), with an axially parallel output shaft (18) and with gear sets arranged on the shafts (14, 16, 18) and shiftable by means of synchronous clutches (28) to form a plurality of forward gears and one reverse gear,
wherein the gear sets are subdivided into a first partial gearbox (A) with one input shaft (14) and a second partial gearbox (B) with the other input shaft (16),
wherein a pre-shifting and/or post-shifting unit (30, 32) is associated with the first partial gearbox (A) and/or the second partial gearbox (B) which can be shifted between two different transmission ratios,
wherein the at least one pre-shifting and/or post-shifting unit (30, 32) is a planetary gear that can be shifted between two different transmission ratios,
wherein the pre-shifting and/or post-shifting unit (30, 32) as a planetary gear has an input element (34), an output element (36) and a transmission element (40) that can be held by a brake (B) for shifting of the lower transmission ratio,
and wherein the planetary gear can be shifted to the higher 1:1 transmission ratio by means of a clutch (K3), wherein the clutch (K3) connects each of the two elements (34, 40) of the planetary gear with each other,
**characterised in that** the input element of the planetary gear is a ring gear (34), that the output element is a planetary wheel (38) carrier (36), and that the transmission element is a sun wheel (40) meshing with the planetary wheels (38) which can be held by the brake (B) or connected to the other element (34) of the planetary gear by means of the clutch (K3), that the clutch (K3) is provided between the driven ring gear (34) and the sun wheel (40), and that the brake (B) and the separate clutch (K3) are arranged on a shared hollow shaft (42) with the sun wheel (40).

2. Double-clutch gearbox according to claim 1, **characterised in that** a first shifting unit (30) as a pre-shifting unit is positioned on the input shaft of one of the partial gearboxes (A, B) and a second shifting unit (32) is positioned on the output shaft (18) in flux behind the gear sets (I to V, R) of both partial gearboxes (A, B).

3. Double-clutch gearbox according to claim 1, **characterised in that** the first shifting unit (30) is adjacent to the double clutch (K1, K2) on the input shaft (14) formed as an input hollow shaft of the first partial gearbox (A) and the second shifting unit (32) is arranged on the input shaft (16) of the second partial gearbox (B).

4. Double-clutch gearbox according to claim 1, **characterised in that** both shifting units (30, 32) are positioned shifted directly one behind the other on an input shaft of one partial gearbox (A, B).

## Revendications

1. Transmission à double embrayage comme boîte de vitesses destinée à des véhicules automobiles, avec deux arbres d'entrée (14, 16) agencés de manière coaxiale qui sont activés par l'intermédiaire d'un embrayage (K1, K2) chacun, avec un arbre de sortie (18) parallèle à l'axe et avec des trains de roues dentées agencés sur les arbres (14, 16, 18), commutables au moyen d'embrayages synchrones (28) et destinés à former plusieurs rapports de marche avant et un rapport de marche arrière,
dans laquelle les trains de roues dentées sont divisés en un premier mécanisme partiel (A) avec l'arbre d'entrée (14) et un deuxième mécanisme partiel (B) avec l'autre arbre d'entrée (16),
dans laquelle au moins une unité primaire et/ou secondaire (30, 32) qui est commutable dans deux rapports de transmission différents est associée au premier mécanisme partiel (A) et/ou au deuxième mécanisme partiel (B),
dans laquelle l'au moins une unité primaire et/ou secondaire (30, 32) est un engrenage planétaire commutable dans deux rapports de transmission,
dans laquelle l'unité primaire et/ou secondaire (30, 32) comporte en tant qu'engrenage planétaire un élément d'entrée (34), un élément de sortie (36) et un élément de transmission (40) pouvant être immobilisé par l'intermédiaire d'un frein (B) afin de commuter le rapport de transmission le plus bas
et dans laquelle l'engrenage planétaire peut être commuté par l'intermédiaire d'un embrayage (K3) dans le rapport de transmission 1:1 supérieur, l'embrayage (K3) reliant à chaque fois deux éléments (34, 40) de l'engrenage planétaire entre eux,
**caractérisée en ce que** l'élément d'entrée de l'engrenage planétaire est une roue à denture intérieure (34), **en ce que** l'élément de sortie est une barre (36) portant des roues satellites (38) et **en ce que** l'élément de transmission est une roue solaire (40) qui s'engrène avec les roues satellites (38) et qui peut être immobilisée par l'intermédiaire du frein (B) ou reliée à l'un des autres éléments (34) de l'engrenage planétaire par l'intermédiaire de l'embrayage (K3), **en ce que** l'embrayage (K3) est prévu à chaque fois entre la roue à denture intérieure (34) motrice et la roue solaire (40) et **en ce que** le frein (B) et l'embrayage séparé (K3) sont agencés sur un arbre creux commun (42) avec la roue solaire (40).

2. Transmission à double embrayage selon la revendication 1, **caractérisée en ce qu'une** première unité de commutation (30) est positionnée comme unité primaire sur l'arbre d'entrée de l'un des mécanismes partiels (A, B) et une deuxième unité de commutation (32) est positionnée dans le flux de forces derrière les trains de roues dentées (I à V, R) des deux mécanismes partiels (A, B) sur l'arbre de sortie (18).

3. Transmission à double embrayage selon la revendication 1, **caractérisée en ce que** la première unité de commutation (30) est agencée au voisinage du double embrayage (K1, K2) sur l'arbre d'entrée (14), conçu comme un arbre d'entrée creux, du premier mécanisme partiel (A) et la deuxième unité de commutation (32) est agencée sur l'arbre d'entrée (16) du deuxième mécanisme partiel (B).

4. Transmission à double embrayage selon la revendication 1, **caractérisée en ce que** les deux unités de commutation (30, 32) sont positionnées directement l'une derrière l'autre sur un arbre d'entrée d'un mécanisme partiel (A, B).
